# EUROPÄISCHE PATENTSCHRIFT

(11) **EP 3 878 538 B1**
(45) Veröffentlichungstag und Bekanntmachung des Hinweises auf die Patenterteilung: **02.04.2025**
(21) Anmeldenummer: 21161892.1
(22) Anmeldetag: 10.03.2021
(51) Int. Cl.: B01D 45/16, B03C 3/01, B03C 3/15, B01D 53/75, F23J 15/00, F23J 15/02

(54) **VORRICHTUNG ZUM REINIGEN VON ABGASEN AUS EINER FEUERSTELLE**
DEVICE FOR PURIFYING WASTE GASES FROM A FIREPLACE
DISPOSITIF DE PURIFICATION DES GAZ D'ÉCHAPPEMENT D'UN FOYER

(30) Priorität: 12.03.2020 DE 102020106773
(43) Veröffentlichungstag der Anmeldung: 15.09.2021
(73) Patentinhaber: Kutzner + Weber GmbH, 82216 Maisach (DE)
(72) Erfinder: WAGENFELD, Rolf, 82216 Maisach (DE); WESEL, Andreas, 82216 Maisach (DE); BARANOWSKI, Tim, 82216 Maisach (DE); LINDENMÜLLER, Mathias, 82216 Maisach (DE)
(74) Vertreter: Weickmann & Weickmann PartmbB

(56) Entgegenhaltungen:
- AT-B- 412 533
- CN-U- 204 648 581
- DE-A1- 102015 103 337
- US-A1- 2008 173 178
- US-A1- 2016 107 120

## Beschreibung

Die vorliegende Erfindung betrifft eine Vorrichtung zum Reinigen von Abgasen aus einer Feuerstelle.

In jüngerer Zeit ist durch das erhöhte Umweltbewusstsein in der Bevölkerung nicht mehr nur der Individualverkehr, sondern auch die Beheizung von Wohnhäusern und gewerblichen Räumen mit Feuerstellen, wie beispielsweise Biomasseheizungen, in den Fokus der Aufmerksamkeit gerückt. Insbesondere die Filterung von Feinstaub und schädlichen Begleitstoffen aus den Abgasen solcher Feuerstellen ist hierbei mittlerweile auch vom Gesetzgeber in vielen Ländern verlangt worden und die Weltgesundheitsorganisation ist dabei, sehr niedrige Grenzwerte für viele Schadstoffe anzusetzen. Da damit gerechnet wird, dass die Vorgaben für derartige Feuerstellen in der Zukunft noch strenger werden, werden für zukünftige und bestehende Öfen aufwendige Maßnahmen zur Neukonstruktion oder Nachrüstung notwendig werden. Hierbei stellt sich insbesondere die Frage, wie eine kompakte Lösung zum Reinigen von Abgasen aus Feuerstellen aussehen kann, die gegebenenfalls modular sein sollte und im Idealfall die Abgase der Feuerstelle soweit reinigen sollte, dass ein Schornstein komplett ersetzt werden kann, also nur komplett gereinigte Luft in akzeptabler Temperatur und ohne nennenswerte Schadstoffe aus der Vorrichtung austritt.

Eine gattungsgemäße Vorrichtung zum Reinigen von Abgasen ist beispielsweise aus der DE 10 2015 103337 A1 bekannt. Ferner sei der Vollständigkeit halber auf die US 2016/107120 A1 und die AT 412 533 B verwiesen.

Ferner kann für den optimalen Betrieb der jeweiligen Feuerstelle gewünscht sein, diese von der Raumluft unabhängig zu betreiben, das heißt Zuluft von außerhalb des entsprechenden Raums zuzuführen.

Zur Lösung der genannten Aufgaben und zum Bereitstellen einer Vorrichtung zum Reinigen von Abgasen aus einer Feuerstelle, mit der auch zukünftige Grenzwerte für Schadstoffe eingehalten werden können und die dennoch sowohl kompakt als auch in bestehenden Feuerstellen einfach nachrüstbar ist, wird erfindungsgemäß vorgeschlagen, dass diese umfasst: ein Gehäuse, welches funktionelle Komponenten der Vorrichtung aufnimmt, einen Einlassabschnitt, welcher dazu vorgesehen ist, Abgase von der Feuerstelle aufzunehmen, einen Auslassabschnitt, welcher dazu vorgesehen ist, Abgase aus der Vorrichtung abzugeben, einen Bypassabschnitt, welcher dazu eingerichtet ist, eine direkte Verbindung zwischen dem Einlassabschnitt und dem Auslassabschnitt herzustellen und welcher mittels einer ersten mechanischen Klappenanordnung verschließbar ist, und einen Reinigungsabschnitt, welcher sich zwischen dem Einlassabschnitt und dem Auslassabschnitt zum Führen eines Abgasstroms erstreckt und mit einer Mehrzahl von funktionellen Komponenten versehen ist. Hierbei umfassen die funktionellen Komponenten wenigstens eine elektrostatische Filtereinheit zum Abscheiden von Feinstaubpartikeln, eine Fliehkraft-Abscheidereinheit zum Austreiben von Partikeln aus dem Abgas und eine Gebläseeinheit zum Antreiben einer Strömung des Abgases durch den Reinigungsabschnitt.

Indem erfindungsgemäß funktionelle Komponenten und insbesondere sämtliche mit der Reinigung des Abgases betraute Komponenten innerhalb eines einzelnen Gehäuses aufgenommen sind, kann einerseits eine kompakte und benutzerfreundliche Einheit geschaffen werden, die andererseits auch eine besondere Eignung als Nachrüstlösung für bestehende Feuerstellen aufweist. Hierbei ist der Bypassabschnitt dazu vorgesehen, bei einem Ausfall der Vorrichtung, insbesondere der Gebläseeinheit, die Betriebssicherheit der Vorrichtung sicherzustellen. Ferner kann die dem Bypassabschnitt zugeordnete erste mechanische Klappeneinheit als eine Art Drosselklapppe dienen, so dass durch den verstellbaren Rücklaufgrad der durch die Gebläseeinheit erzeugte Zug einstellbar ist.

Ferner kann die erste mechanische Klappenanordnung aus Sicherheitsgründen derart eingerichtet sein, dass sie in einem stromlosen Zustand der Vorrichtung stets offen ist.

Es versteht sich, dass neben der elektrostatischen Filtereinheit und der Fliehkraft-Abscheidereinheit weitere funktionelle Komponenten in dem Reinigungsabschnitt angeordnet sein können, die jeweils spezifisch auf einzelne Bestandteile der Abgase wirken. Beispielsweise kann eine Katalysatoreinheit zum katalytischen Behandeln der Abgase vorgesehen sein, wobei es sich insbesondere um einen Katalysator mit einer aktiven Beschichtung handeln kann. Um einen optimalen Wirkungsgrad einer solchen Katalysatoreinheit auch bei noch kaltem Abgas, beispielsweise in einem Zustand kurz nach Inbetriebnahme der Feuerstelle, zu erreichen, kann die Vorrichtung ferner eine vorgeschaltete Heizeinrichtung zum Heizen der Abgase vor Eintritt in die Katalysatoreinheit umfassen, sodass die Abgase auf eine optimale Oxidationstemperatur vorbeheizt werden können, wenn sie selbst eigentlich noch zu kühl sind. Zu diesem Zweck kann beispielsweise an eine elektrisch betriebe Heizwendel gedacht werden, die geeignet im Abgas-Strömungsweg stromaufwärts der Katalysatoreinheit angeordnet ist.

Alternativ oder zusätzlich können die funktionellen Komponenten zur Behandlung der Abgase in dem Abgasstrom ferner eine Einspritzeinheit zum Einsprühen eines flüssigen Mittels und/oder eine Bestrahlungseinheit, insbesondere eine Ultraviolett-Bestrahlungseinheit, umfassen. Hierbei kann ein geeignetes flüssiges Mittel zur Abgasbehandlung in sehr feinen Tröpfchen in den Abgasstrom eingesprüht werden, wodurch einerseits chemische Reaktionen zwischen dem Mittel und bestimmten gasförmigen Bestandteilen des Abgases ausgelöst werden können und andererseits Feinstäube bereits früh in der Behandlungskette agglomerieren können. Durch die Bestrahlung, insbesondere mittels einer Ultraviolett-Strahlungsquelle, können ferner weitere chemische Reaktionen von Bestandteilen des Abgases ausgelöst werden, um diese umzuwandeln oder unschädlich zu machen.

Um einen energetisch optimierten Betrieb der erfindungsgemäßen Vorrichtung zu ermöglichen, kann diese als funktionelle Komponente ferner einen Abgas-Wärmetauscher, welcher dazu eingerichtet ist, dem Abgasstrom Wärme zu entnehmen, und/oder einen thermoelektrischen Generator und/oder ein Schalldämpferelement umfassen.

Um ferner durch die erfindungsgemäße Vorrichtung Einfluss auf die Parameter des Verbrennungsvorgangs in der Feuerstelle nehmen zu können, können die funktionellen Komponenten ferner eine Zufuhreinrichtung für Verbrennungsluft zu der Feuerstelle umfassen, wobei diese Zufuhreinrichtung weiterhin wenigstens eines umfassen kann aus einer Erwärmungseinheit für die Verbrennungsluft, insbesondere einen Wärmetauscher, welcher dazu angeordnet und eingerichtet ist, Wärme von der Fliehkraft-Abscheidereinheit und/oder abgasdurchströmten Rohrleitungen auf die Verbrennungsluft zu übertragen, und einer zweiten mechanischen Klappeneinheit zum Steuern des Strömungsgrades von Verbrennungsluft. Durch diese Maßnahmen kann sowohl auf die Temperatur als auch die Strömungsmenge der zu der Feuerstelle zugeführten Verbrennungsluft Einfluss genommen werden, sodass diese Parameter jeweils auf optimale Werte für eine möglichst effiziente Verbrennung eingestellt werden können. Ferner kann durch das Zuführen von Verbrennungsluft durch die erfindungsgemäße Vorrichtung auf das Zuführen von Raumluft zu der Feuerstelle verzichtet werden, wenn die Vorrichtung selbst die Verbrennungsluft von außerhalb des Raums entnimmt, in dem die Feuerstelle platziert ist. Weiterhin kann die zweite mechanische Klappeneinheit zum Schutz vor einem ungewollten Austreten von warmer Luft in die Umgebung eingesetzt werden, wenn sie in einem kalten Zustand der Vorrichtung verschlossen wird.

Erfindungsgemäß umfasst die erfindungsgemäße Vorrichtung einen dem Auslassabschnitt zugeordneten steuerbaren Zugregler, welcher derart eingestellt werden kann, dass die Druckverhältnisse innerhalb der Vorrichtung oder im Bypassbetrieb die Druckverhältnisse der Feuerstätte nicht durch den Kaminzug negativ beeinflusst werden. In Ausführungsformen, in welchen das System ohne Kamin betrieben wird, ist die an dem Auslassabschnitt austretende Luft entsprechend abzuleiten.

Weiterhin umfasst die erfindungsgemäße Vorrichtung ferner eine Steuereinheit , welche dazu eingerichtet ist, den steuerbaren Zugregler und ggf. ferner wenigstens eine der funktionellen Komponenten und/oder wenigstens eine der Klappenanordnungen anzusteuern. In der Nomenklatur der vorliegenden Anmeldung wird diese Steuereinheit zunächst einmal nicht zu den funktionellen Komponenten gezählt, da sie entweder innerhalb oder außerhalb des Gehäuses der Vorrichtung vorgesehen sein kann und keinen direkten Einfluss auf die zu reinigenden Abgase nimmt. Hierbei kann die Steuereinheit durch beliebige bekannte Mittel ausgeführt sein, wie beispielsweise einen Mikrocontroller mit einem fest verbauten Speicher oder ähnliche Datenverarbeitungsmittel. Weiterhin kann die Steuereinheit mit Sensoreinheiten in Datenverbindung stehen, die an einer oder mehreren Positionen innerhalb der Vorrichtung Daten über die Abgase, beispielsweise hinsichtlich ihrer Temperatur, Strömungsrate und/oder chemischen Zusammensetzung liefern, und auf deren Grundlage die Steuereinheit dann entsprechende Einstellungen an den von ihr anzusteuernden Komponenten der Vorrichtung vornehmen kann. Die Steuereinheit kann ferner über ein Kommunikationsmodul zum Auslesen verschiedener Daten, wie beispielsweise der von der Vorrichtung geleisteten Betriebsstunden und anderen Parametern, verwendet werden. Hierzu ist eine Kopplung mit einer mobilen Vorrichtung mit darauf laufender dedizierter Software oder eine direkte Anbindung einer Anzeigevorrichtung über eine kabelgebundene oder kabellose Verbindung denkbar.

Weiterhin kann dem Gehäuse der erfindungsgemäßen Vorrichtung eine Positionierungseinrichtung zugeordnet sein, insbesondere höhenverstellbare Standfüße und/oder eine Vorrichtung zur Befestigung an einer externen Komponente, wobei hierdurch die Montage der Vorrichtung bezüglich bereits bestehender Feuerstellen erleichtert wird und durch die Anpassung der Positionierung des Gehäuses an verschiedene Typen von Feuerstellen die erfindungsgemäße Vorrichtung als "plug and play"-Komponente verbaut werden kann.

Indem in einer Ausführungsform der Erfindung das Gehäuse feuerfest ausgebildet wird, kann die Vorrichtung auch für den Einbau in Wohnbereichen geeignet gestaltet werden.

Ferner kann die erfindungsgemäße Vorrichtung einen Reinigungsanschluss für einen Aschesauger im Bereich der Fliehkraft-Abscheidereinheit umfassen, um dort anfallende Asche einfach und sauber entnehmen zu können.

Zuletzt betrifft die vorliegende Erfindung ein System zum Beheizen eines Raums, umfassend eine Feuerstelle, eine durch ihren Einlassabschnitt mit der Feuerstelle gekoppelte erfindungsgemäße Vorrichtung wie eben beschrieben sowie ggf. einen mit dem Auslassabschnitt gekoppelten Schornstein.

Weitere Merkmale und Vorteile der vorliegenden Erfindung werden aus der nachfolgenden Beschreibung einer Ausführungsform noch deutlicher, wenn diese zusammen mit den beiliegenden Figuren betrachtet wird. Diese zeigen im Einzelnen:
- Fig. 1: eine Ausführungsform einer erfindungsgemäßen Vorrichtung in einer schematischen isometrischen Ansicht; und
- Fig. 2: die Vorrichtung aus Figur 1 in einer Seiten-Querschnittsansicht.

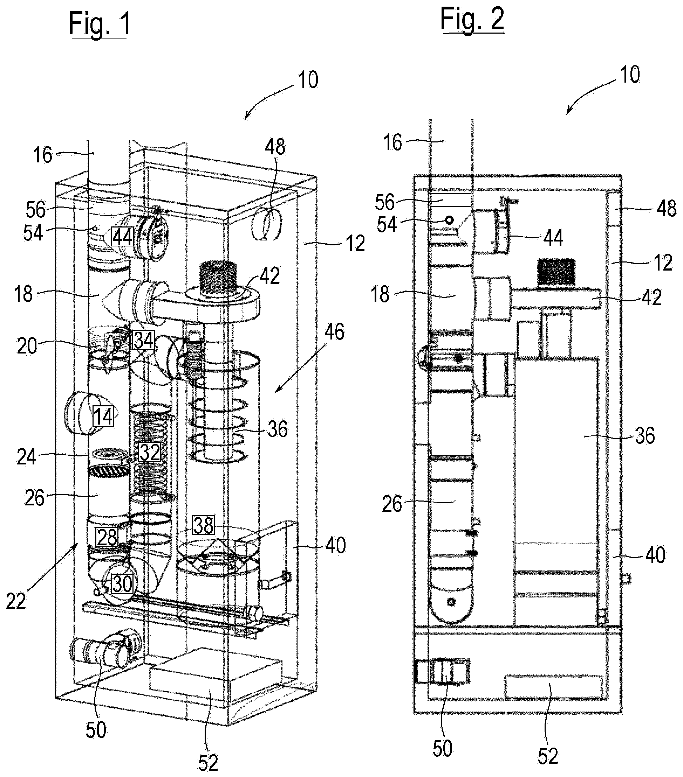

Die Figuren 1 und 2 zeigen jeweils eine Ausführungsform einer erfindungsgemäßen Vorrichtung 10 zum Reinigen von Abgasen aus einer in den Figuren nicht dargestellten Feuerstelle. Hierbei ist in der schematischen isometrischen Ansicht aus Figur 1 ein Teil des Gehäuses 12 entfernt, um die im Inneren davon vorgesehenen Komponenten der Vorrichtung hervorzuheben, während in Figur 2 eine Seiten-Querschnittsansicht derselben Vorrichtung 10 dargestellt ist. Weiterhin sei darauf hingewiesen, dass das Gehäuse 12 an seiner Innenseite mit einer geeigneten Wärmedämmung ausgestattet sein kann.

Bis auf einen Einlassabschnitt 14 zum Aufnehmen von Abgasen von der nicht dargestellten Feuerstelle und einen Auslassabschnitt 16 zum Abgeben von Abgasen aus der Vorrichtung 10 ist das Gehäuse 12 hinsichtlich eines Abgasstroms geschlossen. Zwischen dem Einlassabschnitt 14 und dem Auslassabschnitt 16 ist ferner ein Bypassabschnitt 18 vorgesehen, welcher durch eine erste mechanische Klappenanordnung 20 verschließbar ist und eine direkte Verbindung zwischen dem Einlassabschnitt 14 und dem Auslassabschnitt 16 bildet. Insbesondere kann die Klappenanordnung aus Sicherheitsgründen derart eingerichtet sein, dass sie in einem stromlosen Zustand der Vorrichtung 10 stets offen ist.

Andererseits befindet sich innerhalb des Gehäuses 12 ein Reinigungsabschnitt 22, den die Abgase bei verschlossenem Bypassabschnitt 18 zu ihrer Reinigung durchlaufen. Die in diesem Reinigungsabschnitt 22 vorgesehenen funktionellen Komponenten, die im Folgenden beschrieben werden, können auch in anderen Reihenfolgen angeordnet sein und es müssen auch nicht sämtliche der Komponenten in jeder erfindungsgemäßen Vorrichtung verbaut sein, die hier gezeigte Ausführungsform stellt jedoch eine besonders vorteilhafte Konfiguration dar.

Das durch den Einlassabschnitt 14 eintretende Abgas wird zunächst optional durch eine steuerbare Heizeinrichtung 24 erwärmt, beispielsweise wenn durch eine nicht dargestellte Sensoreinheit festgestellt wird, dass es für die nachfolgenden Behandlungsschritte noch zu kühl ist, oder auch anhand einer mit der Feuerstelle gekoppelten Zeitaufnahmevorrichtung, mittels derer während eines Aufwärmbetriebs der gesteuerten Feuerstelle eine Zeit festgestellt werden kann, während welcher sich die Abgase und die nachfolgenden Komponenten noch nicht in einem optimalen thermischen Bereich zur Reinigung davon befinden.

Nachfolgend durchlaufen die Abgase eine Katalysatoreinheit 26 mit einer aktiven Beschichtung zum katalytischen Behandeln der Abgase, der ein thermoelektrischer Generator 28 zur Erzeugung bzw. Wiedergewinnung von Energie nachgeschaltet ist. Hiernach kann wiederum eine Bestrahlungseinheit 30, insbesondere eine Ultraviolett-Bestrahlungseinheit, vorgesehen sein, um weitere chemische Reaktionen von Bestandteilen der Abgase auszulösen.

Innerhalb des hierauf folgenden Steigrohrabschnitts des Reinigungsabschnitts 22 ist ein Abgaswärmetauscher 32 vorgesehen, welcher ebenfalls zu einer Rückgewinnung von Wärmeenergie aus den nunmehr teilweise behandelten Abgasen eingesetzt wird. Am oberen Ende des angesprochenen Steigrohrabschnitts befindet sich ferner eine Einspritzeinheit 34 zum Einspritzen eines flüssigen Behandlungsmittels für die Abgase, das einerseits zu einer chemischen Umwandlung von unerwünschten gasförmigen Bestandteilen der Abgase und andererseits zu einem Agglomerieren von Feinstaubbestandteilen der Abgase beitragen kann.

Hiernach gelangen die Abgase in den Bereich einer elektrostatischen Filtereinheit 36 zum Abscheiden von Feinstaubpartikeln, in welcher die Partikel durch elektrostatische Aufladung miteinander agglomerieren und leichter abscheidbare größere Partikel entstehen. Diese werden wiederum mittels einer Fliehkraft-Abscheidereinheit 38 gesammelt und können über eine Öffnung 40 zu gegebener Zeit entnommen und entsorgt werden. Insbesondere kann an dieser Stelle ein Reinigungsanschluss für einen Aschesauger vorgesehen sein. Hierbei kann die Abscheidereinheit 38 beispielsweise einen Gleichstrom- oder Querstromzyklon umfassen.

Zuletzt durchlaufen die mittlerweile gereinigten Abgase eine Gebläseeinheit 42, durch welche eine Ansaugwirkung zum Treiben der Abgase durch die zuvor beschriebenen Komponenten erzeugt wird. Hiernach können die Abgase schließlich dem Auslassabschnitt 16 zugeführt und durch diesen beispielsweise an einen nicht dargestellten nachgeschalteten Schornstein abgegeben werden, wobei zur Einstellung hiervon im Bereich des Auslassabschnitts 16 ein ggf. steuerbarer Zugregler 44 angeordnet ist.

Neben dem eben beschriebenen Reinigungsabschnitt 22 für Abgase umfasst die Vorrichtung 10 ferner eine Zufuhreinrichtung 46 für Verbrennungsluft von der Umgebung der Vorrichtung 10 zu der nicht dargestellten Feuerstelle. Diese Zufuhreinrichtung 46 umfasst insbesondere eine Einlassöffnung 48 für Frischluft aus der Umgebung der Vorrichtung 10 und eine mittels einer zweiten mechanischen Klappeneinheit steuerbare Verbrennungsluftzuführung 50 zum Brennraum der Feuerstelle. Indem die an der Einlassöffnung 48 entnommene Luft von außerhalb des Raums stammt, in welchem die Feuerstelle platziert ist, kann diese von Raumluft vollständig unabhängig sein. Dies kann beispielsweise erreicht werden, indem an der Einlassöffnung 48 ein Stutzen eines Rohrs angeschlossen wird, das aus dem entsprechenden Raum heraustritt, oder indem die Vorrichtung 10 selbst außerhalb des betreffenden Raums angeordnet wird. In einem solchen Fall müsste dann lediglich jeweils ein Rohr zwischen der Feuerstelle und dem Einlassabschnitt 14 sowie der Verbrennungsluftzuführung 50 vorgesehen werden.

Im Betrieb der Vorrichtung 10 kann beispielsweise die in dem Wärmetauscher 32 dem Abgas entnommene Wärme auf die dem Brennraum zuzuführende Verbrennungsluft übergeben werden, sodass durch die zweite mechanische Klappe und den Wärmetauscher 32 die Verbrennungsluft hinsichtlich ihrer Menge und ihrer Temperatur für einen optimal effizienten Betrieb der Feuerstelle eingestellt werden kann.

Weiterhin sei noch auf die Steuereinheit 52 hingewiesen, die sich am Boden des Gehäuses 12 der Vorrichtung 10 befindet und mit allen oben beschriebenen steuerbaren Komponenten der Vorrichtung 10 zum Ansteuern davon in Datenverbindung steht, sowie mit Sensoreinheiten zum Erfassen von Parametern des Abgases und/oder der Verbrennungsluft gekoppelt ist, um Regelungsvorgänge mithilfe der oben beschriebenen Komponenten für einen optimalen Betrieb der Vorrichtung 10 vornehmen zu können. Lediglich rein beispielhaft für eine derartige Sensoreinheit ist mit dem Bezugszeichen 54 ein Anschluss für eine Messsonde zur Erfassung von Eigenschaften der gereinigten Abgase im Bereich des Auslassabschnitts 16 angedeutet.

Ferner kann die Steuereinheit über ein nicht dargestelltes Kommunikationsmodul zum Auslesen verschiedener Daten, wie beispielsweise der von der Vorrichtung geleisteten Betriebsstunden und anderen Parametern, verwendet werden. Hierzu ist eine Kopplung mit einer mobilen Vorrichtung mit darauf laufender dedizierter Software oder eine direkte Anbindung einer Anzeigevorrichtung über eine kabelgebundene oder kabellose Verbindung denkbar.

Zuletzt ist in den Figuren unmittelbar vor dem Auslassabschnitt 16 noch ein Schalldämpferelement 56 für Körperschall und Luftschall dargestellt, welches zur Geräuschminimierung und Gehäusedämmung zum Einsatz kommt.

## Patentansprüche

1. Vorrichtung (10) zum Reinigen von Abgasen aus einer Feuerstelle, umfassend:
- ein Gehäuse (12), welches funktionelle Komponenten der Vorrichtung aufnimmt;
- einen Einlassabschnitt (14), welcher dazu vorgesehen ist, Abgase von der Feuerstelle aufzunehmen;
- einen Auslassabschnitt (16), welcher dazu vorgesehen ist, Abgase aus der Vorrichtung abzugeben;
- einen Bypassabschnitt (18), welcher dazu eingerichtet ist, eine direkte Verbindung zwischen dem Einlassabschnitt (14) und dem Auslassabschnitt (16) herzustellen und welcher mittels einer ersten mechanischen Klappenanordnung (20) verschließbar ist; und
- einen Reinigungsabschnitt (22), welcher sich zwischen dem Einlassabschnitt (14) und dem Auslassabschnitt (16) zum Führen eines Abgasstroms erstreckt und mit einer Mehrzahl von funktionellen Komponenten versehen ist,
- wobei die funktionellen Komponenten wenigstens umfassen:
∘ eine elektrostatische Filtereinheit (36) zum Abscheiden von Feinstaub-Partikeln;
∘ eine Fliehkraft-Abscheidereinheit (38) zum Austragen von Partikeln aus dem Abgas; und
∘ eine Gebläseeinheit (42) zum Antreiben einer Strömung des Abgases durch den Reinigungsabschnitt (22)
**dadurch gekennzeichnet, dass** dem Auslassabschnitt (16) ein steuerbarer Zugregler (44) zugeordnet ist, und
die Vorrichtung (10) ferner eine Steuereinheit (52) umfasst, welche dazu eingerichtet ist, den steuerbaren Zugregler (44) anzusteuern.

2. Vorrichtung nach Anspruch 1, wobei die erste mechanische Klappenanordnung (20) derart eingerichtet sein, dass sie in einem stromlosen Zustand der Vorrichtung (10) stets offen ist.

3. Vorrichtung (10) nach Anspruch 1 oder 2, wobei die funktionellen Komponenten ferner umfassen:
- eine Katalysatoreinheit (26) zum katalytischen Behandeln der Abgase, gegebenenfalls mit einer vorgeschalteten Heizeinrichtung (24) zum Heizen der Abgase.

4. Vorrichtung (10) nach einem der Ansprüche 1 bis 3, wobei die funktionellen Komponenten zur Behandlung der Abgase in dem Abgasstrom ferner umfassen:
- eine Einspritzeinheit (34) zum Einsprühen eines flüssigen Mittels und/oder
- eine Bestrahlungseinheit (30), insbesondere eine Ultraviolett-Bestrahlungseinheit.

5. Vorrichtung (10) nach einem der vorhergehenden Ansprüche, wobei die funktionellen Komponenten ferner umfassen:
- einen Abgas-Wärmetauscher (32), welcher dazu eingerichtet, dem Abgasstrom Wärme zu entnehmen, und/oder
- einen thermoelektrischen Generator (28) und/oder
- ein Schalldämpferelement (56).

6. Vorrichtung (10) nach einem der vorhergehenden Ansprüche, wobei die funktionellen Komponenten ferner umfassen:
- eine Zufuhreinrichtung (46) für Verbrennungsluft zu der Feuerstelle.

7. Vorrichtung (10) nach Anspruch 6, wobei die Zufuhreinrichtung (46) für Verbrennungsluft wenigstens eines umfasst aus:
- einer Erwärmungseinheit für die Verbrennungsluft, insbesondere einen Wärmetauscher, welcher dazu angeordnet und eingerichtet ist, Wärme von der Fliehkraft-Abscheidereinheit (38) und/oder abgasdurchströmten Rohrleitungen auf die Verbrennungsluft zu übertragen, und
- einer zweiten mechanischen Klappeneinheit zum Steuern der Strömungsrate von Verbrennungsluft.

8. Vorrichtung (10) nach einem der vorhergehenden Ansprüche, wobei die Steuereinheit (52) ferner dazu eingerichtet ist, wenigstens eine der funktionellen Komponenten und/oder wenigstens eine der Klappenanordnungen (20) anzusteuern.

9. Vorrichtung (10) nach Anspruch 8, wobei die Steuereinheit (52) ebenfalls innerhalb des Gehäuses aufgenommen ist.

10. Vorrichtung nach einem der vorhergehenden Ansprüche, wobei dem Gehäuse (12) eine Positionierungseinrichtung zugeordnet ist, insbesondere höhenverstellbare Standfüße und/oder eine Vorrichtung zur Befestigung an einer externen Komponente.

11. Vorrichtung nach einem der vorhergehenden Ansprüche, wobei das Gehäuse (12) feuerfest ausgebildet ist.

12. Vorrichtung nach einem der vorhergehenden Ansprüche, ferner umfassend einen Reinigungsanschluss für einen Aschesauger im Bereich der Fliehkraft-Abscheidereinheit (38).

13. System zum Beheizen eines Raums, umfassend eine Feuerstelle, eine durch ihren Einlassabschnitt (14) mit der Feuerstelle gekoppelte Vorrichtung (12) nach einem der vorhergehenden Ansprüche und gegebenenfalls einen mit dem Auslassabschnitt (16) gekoppelten Schornstein.

## Claims

1. Apparatus (10) for cleaning exhaust gases from a fireplace, comprising:
- a housing (12) which accommodates functional components of the apparatus;
- an inlet section (14), which is intended to receive exhaust gases from the fireplace;
- an outlet section (16), which is intended to discharge exhaust gases from the apparatus;
- a bypass section (18) which is adapted to establish a direct connection between the inlet section (14) and the outlet section (16) and which can be closed by means of a first mechanical flap arrangement (20); and
- a cleaning section (22) which extends between the inlet section (14) and the outlet section (16) for guiding an exhaust gas flow and is provided with a plurality of functional components,
- wherein the functional components comprise at least:
∘ an electrostatic filter unit (36) for separating fine dust particles;
∘ a centrifugal separator unit (38) for removing particulates from the exhaust gas; and
∘ a blower unit (42) for driving a flow of exhaust gas through the cleaning section (22),
**characterised in that** a controllable draught regulator (44) is assigned to the outlet section (16), and
the apparatus (10) further comprises a control unit (52) which is adapted to control the controllable draught regulator (44).

2. Apparatus according to claim 1, wherein the first mechanical flap arrangement (20) is configured such that it is always open when the apparatus (10) is in a de-energised state.

3. Apparatus (10) according to claim 1 or 2, wherein the functional components further comprise:
- a catalyst unit (26) for catalytic treatment of the exhaust gases, optionally with an upstream heating device (24) for heating the exhaust gases.

4. Apparatus (10) according to any of claims 1 to 3, wherein the functional components for treating the exhaust gases in the exhaust gas flow further comprise:
- an injection unit (34) for injecting a liquid agent and/or
- an irradiation unit (30), in particular an ultraviolet irradiation unit.

5. Apparatus (10) according to any of the preceding claims, wherein the functional components further comprise:
- an exhaust gas heat exchanger (32), which is adapted to extract heat from the exhaust gas flow, and/or
- a thermoelectric generator (28) and/or
- a silencer element (56).

6. Apparatus (10) according to any of the preceding claims, wherein the functional components further comprise:
- a feed device (46) for feeding combustion air to the fireplace.

7. Apparatus (10) according to claim 6, wherein the combustion air feed device (46) comprises at least one of:
- a heating unit for the combustion air, in particular a heat exchanger, which is configured and adapted to transfer heat from the centrifugal separator unit (38) and/or pipes through which exhaust gas flows to the combustion air; and
- a second mechanical flap unit for controlling the flow rate of combustion air.

8. Apparatus (10) according to any of the preceding claims, wherein the control unit (52) is further adapted to control at least one of the functional components and/or at least one of the flap arrangements (20).

9. Apparatus (10) according to claim 8, wherein the control unit (52) is also accommodated within the housing.

10. Apparatus according to any of the preceding claims, wherein a positioning device is assigned to the housing (12), in particular height-adjustable feet and/or an apparatus for attaching to an external component.

11. Apparatus according to any of the preceding claims, wherein the housing (12) is designed to be fireproof.

12. Apparatus according to any of the preceding claims, further comprising a cleaning connection for an ash vacuum cleaner in the region of the centrifugal separator unit (38).

13. System for heating a room, comprising a fireplace, an apparatus (12) coupled to the fireplace by its inlet section (14) according to any of the preceding claims, and possibly a chimney coupled to the outlet section (16).

## Revendications

1. Dispositif (10) pour purifier les gaz de combustion d'un foyer, comprenant :
- un boîtier (12) qui abrite des composants fonctionnels du dispositif ;
- une section d'entrée (14) destinée à recevoir les gaz de combustion provenant du foyer ;
- une section de sortie (16) destinée à évacuer les gaz de combustion du dispositif ;
- une section de dérivation (18) qui est adaptée pour établir une communication directe entre la section d'entrée (14) et la section de sortie (16) et qui peut être fermée au moyen d'un premier agencement de clapet mécanique (20) ; et
- une section de nettoyage (22) s'étendant entre la section d'entrée (14) et la section de sortie (16) pour guider un flux de gaz d'échappement et pourvue d'une pluralité de composants fonctionnels,
dans lequel lesdits composants fonctionnels comprennent au moins :
o une unité de filtre électrostatique (36) pour séparer les particules de poussière fine ;
o une unité de séparation centrifuge (38) pour extraire les particules des gaz d'échappement ; et
o une unité de soufflage (42) pour entraîner un flux du gaz d'échappement à travers la section de nettoyage (22),
**caractérisé en ce qu'**un régulateur de tirage contrôlable (44) est associé à la section de sortie (16), et le dispositif (10) comprend en outre une unité de commande (52) adaptée pour commander le régulateur de tirage contrôlable (44).

2. Dispositif selon la revendication 1, dans lequel le premier agencement de clapet mécanique (20) est adapté de manière à être toujours ouvert lorsque le dispositif (10) est hors tension.

3. Dispositif (10) selon la revendication 1 ou 2, dans lequel les composants fonctionnels comprennent en outre :
- une unité catalytique (26) pour le traitement catalytique des gaz d'échappement, éventuellement avec un dispositif de chauffage (24) placé en amont pour chauffer les gaz d'échappement.

4. Dispositif (10) selon l'une des revendications 1 à 3, dans lequel les composants fonctionnels pour le traitement des gaz d'échappement dans le flux de gaz d'échappement comprennent en outre :
- une unité d'injection (34) pour injecter un agent liquide et/ou
- une unité d'irradiation (30), notamment une unité d'irradiation par ultraviolets.

5. Dispositif (10) selon l'une des revendications précédentes, dans lequel les composants fonctionnels comprennent en outre :
- un échangeur de chaleur de gaz d'échappement (32) adapté pour extraire de la chaleur du flux de gaz d'échappement, et/ou
- un générateur thermoélectrique (28) et/ou
- un élément d'insonorisation (56).

6. Dispositif (10) selon l'une des revendications précédentes, dans lequel les composants fonctionnels comprennent en outre :
- un dispositif d'alimentation (46) en air de combustion du foyer.

7. Dispositif (10) selon la revendication 6, dans lequel le dispositif d'alimentation (46) en air de combustion comprend au moins l'un des éléments suivants :
- une unité de chauffage pour l'air de combustion, en particulier un échangeur de chaleur, qui est disposé et adapté pour transférer de la chaleur de l'unité de séparation centrifuge (38) et/ou des conduites traversées par les gaz d'échappement à l'air de combustion ; et
- une deuxième unité de clapet mécanique pour commander le débit d'air de combustion.

8. Dispositif (10) selon l'une des revendications précédentes, dans lequel l'unité de commande (52) est en outre adaptée pour commander au moins l'un des composants fonctionnels et/ou au moins l'un des ensembles de clapets (20).

9. Dispositif (10) selon la revendication 8, dans lequel l'unité de commande (52) est également logée à l'intérieur du boîtier.

10. Dispositif selon l'une des revendications précédentes, dans lequel un dispositif de positionnement est associé au boîtier (12), notamment des pieds réglables en hauteur et/ou un dispositif de fixation à un composant externe.

11. Dispositif selon l'une des revendications précédentes, dans lequel le boîtier (12) est resistant au feu.

12. Dispositif selon l'une des revendications précédentes, comprenant en outre un raccord de nettoyage pour un aspirateur à cendres dans la zone de l'unité de séparation centrifuge (38).

13. Système de chauffage d'un local comprenant un foyer, un dispositif (12) selon l'une des revendications précédentes couplé au foyer par sa section d'entrée (14), et éventuellement une cheminée couplée à la section de sortie (16).
